(19) Europäisches Patentamt
European Patent Office
Office européen des brevets

(11) EP 1 247 825 B1

(12) # EUROPÄISCHE PATENTSCHRIFT

(45) Veröffentlichungstag und Bekanntmachung des Hinweises auf die Patenterteilung:
**21.02.2007 Patentblatt 2007/08**

(51) Int Cl.:
***C08G 18/08*** *(2006.01)* ***C08G 18/10*** *(2006.01)*
***C08G 18/79*** *(2006.01)* ***C09J 175/04*** *(2006.01)*

(21) Anmeldenummer: **02006611.4**

(22) Anmeldetag: **20.03.2002**

(54) **Latent vernetzende wässerige Dispersionen enthaltend ein Polyurethan**

Latent cross-linkable aqueous dispersions comprising a polyurethane

Dispersions aqueuses à réticulation latente comprenant un polyuréthane

(84) Benannte Vertragsstaaten:
**DE ES FR GB IT**

(30) Priorität: **05.04.2001 DE 10116990**

(43) Veröffentlichungstag der Anmeldung:
**09.10.2002 Patentblatt 2002/41**

(73) Patentinhaber: **BASF Aktiengesellschaft**
**67056 Ludwigshafen (DE)**

(72) Erfinder:
- **Meyer-Roscher, Bernd, Dr.**
  **67434 Neustadt (DE)**
- **Burghardt, Andre**
  **67240 Bobenheim-Roxheim (DE)**
- **Licht, Ulrike, Dr.**
  **68309 Mannheim (DE)**

(56) Entgegenhaltungen:
**DE-A- 19 733 044**
**DE-A- 19 828 251**
**US-A- 5 821 294**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 247 825 B1

Printed by Jouve, 75001 PARIS (FR)

## Beschreibung

Latent vernetzende wässerige Polyurethandispersionen, enthaltend

I) eine disperse Phase (P.I), enthaltend

Ia) ein Polyurethan (Ia), das neben hydrophilen Gruppen, die die Wasserdispergierbarkeit bewirken, Carbodiimid-Gruppen trägt und im wesentlichen keine Carboxylgruppen trägt
oder

Ib) eine physikalische Mischung aus

Ibi) einem Polyurethan (Ibi), das hydrophile Gruppen, die die Wasserdispergierbarkeit bewirken, trägt und im wesentlichen keine Carbodiimid oder Carboxylgruppen trägt, und

Ibii) einem Carbodiimid (Ibii), das im wesentlichen keine hydrophilen Gruppen, die die Wasserdispergierbarkeit bewirken, trägt,

und

II) eine disperse Phase (P.II), enthaltend ein sonstiges Polymer (II), das im wesentlichen keine Carbodiimid-Gruppen trägt und im wesentlichen abgeleitet ist von

II.1) 30 bis 99,98 Gew.-% Hauptmonomere ausgewählt aus $C_1$bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

II.2) 0,01 bis 20 Gew.-% einer Carbonsäure mit einer olefinischen Doppelbindung und

II.3) 0,01 bis 10 Gew.-% eines von den Monomeren II.1 und II.2 verschiedenen Monomeren, ausgewählt aus der Gruppe bestehend aus N-Methylol(meth)acrylamid (AMOL), (MAMOL), Acetoacetoxy-ethyl-(meth)acrylat; Diaceton(meth)acrylamid; Gycidyl(meth)acrylat; Ureido-(meth)acrylat; (Meth)acrylsäureanhydrid,

II.4) ggf. von (II.1), (II.2) und (II.3) verschiedenen radikalisch polymerisierbaren Monomeren.

Weiterhin betrifft die Erfindung die Verwendung der erfindungsgemäßen wässerigen Dispersionen als Imprägnierungsmittel, Beschichtungsmittel oder Klebstoff sowie die unter Verwendung dieser Dispersionen hergestellten imprägnierten, beschichteten oder verklebten Gegenstände.

Wässerige Dispersionen, die in dispergierter Form ein Polyurethan enthalten, sind allgemein bekannt. Damit Beschichtungen, die aus dem Polyurethan hergestellt werden, besonders gute mechanische Eigenschaften aufweisen, setzt man diesen Dispersionen eine Vernetzerkomponente zu. Dabei ist es besonders erwünscht, daß der Vernetzer den Molekulargewichtsaufbau des Polyurethans erst bewirkt, wenn die Polyurethandispersion nach dem Auftrag auf das zu beschichtende Werkstück bereits verfilmt ist. Unter diesen Umständen erhält man Filme, die eine besonders hohe Kohäsion aufweisen, da dann auch die Polymermoleküle eines Dispersionsteilchens mit den Polymermolekülen eines anderen benachbarten Dispersionsteilchen über eine kovalente Bindung verknüpft sein können.

Eine besonders gute Kohäsion der Filme ist beispielsweise auf dem Klebstoffgebiet besonders dann erforderlich, wenn der Klebeverbund unter Einwirkung von Wärme mechanisch belastet wird.

Um Klebeverbunde zu erhalten, die auch unter diesen Bedingungen noch eine ausreichende Festigkeit aufweisen, wurde z. B. in der EP-A-206059 empfohlen, den Dispersionen kurze Zeit vor deren Verarbeitung als Klebstoff als Vernetzer ein wasseremulgierbares Polyisocyanat zuzusetzen.

Der Nachteil dieser Zweikomponenten-Systeme besteht jedoch darin, daß die Topfzeit, d.h. der Zeitraum, in dem diese Systeme nach ihrer Vermischung verarbeitet werden können, eng begrenzt ist. Da das Zweikomponenten-System nicht über einen längeren Zeitraum hinweg lagerbar ist und der Verarbeiter sich ein bestimmte Klebstoffmenge, die er innerhalb eines Arbeitszyklus verarbeiten kann, extra herstellen muß, ist der Arbeitsaufwand für den Verarbeiter der Klebstoffe bei Zweikomponenten-Systemen gegenüber Einkomponenten-Systemen erhöht.

Aus der US 4977219 und der 5117059 sind Mischungen einer wässerigen Dispersion eines Carbodiimides und einer wässerigen Dispersion eines Emulsions-Polymeren mit Carboxylat-Gruppen bekannt, wobei die erstgenannte

Dispersion mit Hilfe üblicher oberflächenaktiver Substanzen stabilisiert wird.

Die US 5574083 betrifft eine Mischung einer wässerigen Dispersion von Carbodiimiden, wobei die Dispersion durch hydrophile Polyalkylenoxid-Reste, die die Carbodiimide tragen, stabilisiert wird. Diese Dispersionen werden mit wässerigen Dispersionen eines Emulsions-Polymeren mit Carboxylat-Gruppen abgemischt.

In der EP-A-792908 sind Mischungen einer wässerigen Dispersion eines Carboxylgruppen-tragenden Polyurethans und einer wässerigen Dispersion eines Carbodiimides bekannt, wobei die Dispersion mit Hilfe üblicher oberflächenaktiver Substanzen stabilisiert wird.

Die EP-A-198343 betrifft Carbodiimidgruppen aufweisende Polyurethane mit hydrophilen Gruppen, die die Wasserdispergierbarkeit ermöglichen. Gemäß dieser Lehre werden die Carboxylgruppenhaltigen Polymerdispersionen zugesetzt und bewirken einen Vernetzungseffekt bei den Polymeren.

Gemäß der Lehre der 5 vorgenannten Schriften bewirken die Carbodiimide eine Molekulargewichtserhöhung der Carboxylgruppen-haltigen Polymere, mit denen sie abgemischt werden. Die Festigkeit von mit diesen Dispersionen hergestellten Verklebungen insbesondere in der Wärme läßt jedoch noch zu Wünschen übrig. Weiterhin ist die Topfzeit solcher Mischungen begrenzt.

Die DE-A-19733044 betrifft wässerige Dispersionen eines Polyurethans, das Carbodiimid-Gruppen trägt.

Aus der DE-A-19828251 sind wässrige Dispersionen beschrieben, die 2 verschiedene Sorten Dispersionsteilchen enthalten, von denen die erste Polyurethane mit Carbodiimidgruppen oder Mischungen aus Polyurethanen und Carbodiimiden enthalten und die zweite sonstige Polymere mit Carboxylgruppen.

Die gemäß der Lehre der beiden letztgenannten Schriften hergestellten Dispersionen erfüllen das klebetechnische Anforderungsprofil bereits. Allerdings weisen mit diesen Dispersionen vorbehandelte Werkstücke eine zu geringe Blockfestigkeit auf. Unter Blockfestigkeit verstehen wir die Eigenschaft, daß Werkstücke, die mit der Dispersion benetzt wurden, nach der Trocknung bei Anwendung von nur geringem Druck nicht miteinander oder mit anderen Gegenständen verkleben.

So sollen die vorbereiteten Werkstücke, wenn sie aufeinandergestapelt werden, und der auf den Klebstoffoberflächen lastende Druck weniger als 1 $kg/cm^2$ beträgt, auch nach längerer Lagerung noch kraftlos trennbar sein. Erst bei Anwendung eines Druckes von ca. 0,5 $N/mm^2$, wie er typischerweise beim Verkleben der vorbehandelten Werkstücke aufgewandt wird, soll ein möglichst fester Klebeverbund entstehen.

Hierdurch wird die Arbeitsorganisation bei der Herstellung der verklebten Gegenstände deutlich vereinfacht. Erst mit im wesentlichen blockfreien mit Klebstoff beschichteten Werkstücken ist es praktisch möglich, den Verarbeitungsschritt der Klebstoffbeschichtung von der eigentlichen Verklebung der klebstoffbeschichteten Werkstücke räumlich oder zeitlich zu trennen, da dies eine effiziente Lagerung und Transport bedingt.

Die Aufgabe der vorliegenden Erfindung bestand daher darin, eine weitere einkomponentige Polyurethandispersion zur Verfügung zu stellen, die die Nachteile des Standes der Technik nicht aufweist. Sie soll insbesondere eine gute Lagerstabilität aufweisen und bezüglich der Blockfestigkeit der damit vorbereiteten Werkstücke weiter verbessert sein.

Demgemäß wurden die eingangs definierten wässerigen Dispersionen gefunden.

Die disperse Phase P.I enthält im allgemeinen 0,01 bis 1, bevorzugt 0,1 bis 0,5, besonders bevorzugt 0,15 bis 0,4 mol an Carbodiimidgruppen pro kg an für den Aufbau der Polyurethane Ia bzw Ibi und Ibii eingesetzten Monomere.

Geeignete Polyurethane (Ia) sind beispielsweise in der EP-A-792908 beschrieben.

Grundsätzlich kommen als Polyurethane (Ia) alle hydrophilen Polyurethane in Betracht, bei deren Aufbau Monomere mit Carbodiimid-Struktureinheiten mitverwendet werden. Die Carbodiimid-Struktureinheiten werden in das Polyurethan (Ia) bevorzugt eingeführt über Polyisocyanate (Ia1.1), enthaltend eine oder mehrere der Carbodiimid-Struktureinheiten. Derartige Polyisocyanate (Ia1.1) gehorchen bevorzugt der allgemeinen Formel Ia1.1.1

$$OCN\text{-}(R^c\text{-}N\text{=}C\text{=}N)_n\text{-}R^c\text{-}NCO \qquad (Ia1.1.1)$$

in der $R^c$ für einen zweiwertigen, ggf. Harnstoff-, Urethan-, Ester-, und/oder Ethergruppen aufweisenden Kohlenwasserstoffrest, wie er durch Entfernung der Isocyanatgruppen aus einem einfachen organischen Isocyanat oder einem Urethangruppen und ggf. Etheroder Estergruppen aufweisenden Präpolymer, das endständig Isocyanatgruppen trägt, erhalten wird, wobei bei Vorliegen von mehreren Resten $R^1$ im gleichen Molekül gleichzeitig auch unterschiedliche, der genannten Definition entsprechende Reste $R^1$ vorliegen können und

n für eine ganze oder (im statistischen Mittel) gebrochene Zahl von 1 bis 20, vorzugsweise von 2 bis 10, steht.

Die Carbodiimid-Struktureinheiten werden in das Polyurethan (Ia) besonders bevorzugt eingeführt über Polyisocyanate der allgemeinen Formel Ia1.1.2

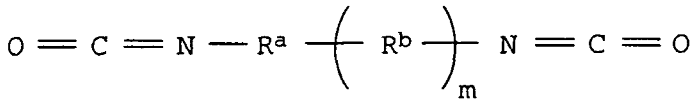

Ia1.1.2

mit

$R^a$: eine Gruppe der Formel Ia1.1.2.1

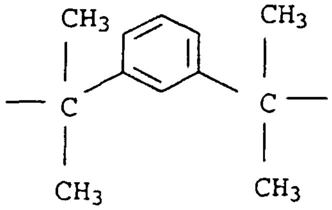

Ia1.1.2.1

$R^b$: eine Gruppe der Formel Ia1.1.2.2

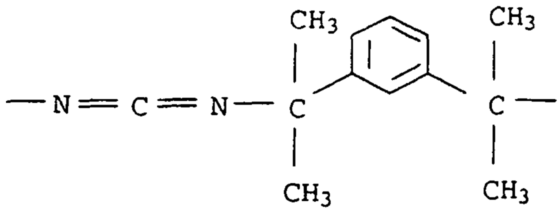

Ia1.1.2.2

und
m: eine Zahl von 1 bis 20

Im allgemeinen sind die Polyurethane (Ia) ansonsten aufgebaut aus

Ia1) Diisocyanaten, die

Ia1.1) Carbodiimid-Struktureinheiten enthalten und
gegebenenfalls solchen,

Ia1.2) die frei sind von Carbodiimid-Struktureinheiten,

Ia2) Diolen, von denen

Ia2.1) 10 bis 100 mol-%, bezogen auf die Gesamtmenge der Diole (b), ein Molekulargewicht von 500 bis 5000 aufweisen, und

Ia2.2) 0 bis 90 mol-%, bezogen auf die Gesamtmenge der Diole (Ia2), ein Molekulargewicht von 60 bis 500 g/mol aufweisen,

Ia3) von den Monomeren (Ia1) und (Ia2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ia4) gegebenenfalls weiteren von den Monomeren (Ia1) bis (Ia3) verschiedenen mehrwertigen Verbindungen mit reaktiven Gruppen, bei denen es sich um alkoholische Hydroxylgruppen, primäre oder sekundäre Aminogruppen

oder Isocyanatgruppen handelt und

Ia5) gegebenenfalls von den Monomeren (Ia1) bis (Ia4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Geeignete Diisocyanatocarbodiimide (Ia1.1) sind insbesondere solche der allgemeinen Formel Ia1.1.1 oder Ia1.1.2.

Bevorzugt leiten sich die Reste $R^c$ in Formel Ia1.1.1 durch Abstraktion der Isocyanatgruppen von Monomeren (Ia1.2) ab, bei denen es sich um die Diisocyanate handelt, die üblicherweise in der Polyurethanchemie eingesetzt werden.

Insbesondere zu nennen sind als Monomere (Ia1.2) Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Bei den Resten $R^c$, die sich durch Abstraktion der Isocyanatgruppen aus einem Urethangruppen, ggf. Ether- oder Estergruppen und endständige Isocyanatgruppen aufweisenden Präpolymer ableiten, handelt es sich bevorzugt um solche, die aus den Diolen (Ia2) und den Diisocyanaten (Ia1.2) aufgebaut sind.

Die Herstellung der Monomere (Ia1.1) ist an sich bekannt und wird z.B. in den US 2 840 589, 2 941 966 und EP-A-628 541 sowie von P.W. Campbell und K.C. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 2 504 400 und 2 552 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 2 653 120 beschrieben.

Im allgemeinen werden die Diisocyanate (Ia1.2) außer zur Herstellung der Diisocyanate (Ia1.1) auch direkt zum Aufbau der Polyurethane, die in erfindungsgemäßen Polyurethandispersionen enthalten sind, eingesetzt, da zum Aufbau der Polyurethane häufig mehr Isocyanat benötigt wird als zur Einführung der Carbodiimid-Gruppen erforderlich ist.

Zum Aufbau der Polyurethane kann man als Verbindungen (Ia1.2) außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Diole (Ia2) vornehmlich höhermolekulare Diole (Ia2.1) in Betracht, die ein Molekulargewicht von etwa 500 bis 5000, vorzugsweise von etwa 1000 bis 3000 g/mol haben.

Bei den Diolen (Ia2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC(CH_2)_y-COOH$, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl) cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von

Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist und ein H-Atom einer Methyleneinheit auch durch einen $C_1$- bis $C_4$-Alkylrest substituiert sein kann. Beispiele sind epsilon-Caprolacton, beta-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (Ia2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. alpha, omega-Dihydroxypolybutadien, alpha,-omega-Dihydroxypolymethacrylester oder alpha,-omega-Dihydroxypolyacrylester als Monomere (Ia2.1). Solche Verbindungen sind beispielsweise aus der EP-A-0622378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane lassen sich erhöhen, wenn als Diole (Ia2) neben den Diolen (Ia2.1) noch niedermolekulare Diole (Ia2.2) mit einem Molekulargewicht von etwa 62 bis 500, vorzugsweise von 62 bis 200 g/mol, eingesetzt werden.

Als Monomere (Ia2.2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Bevorzugt beträgt der Anteil der Diole (Ia2.1), bezogen auf die Gesamtmenge der Diole (Ia2) 10 bis 100 mol-% und der Anteil der Monomere (Ia2.2), bezogen auf die Gesamtmenge der Diole (Ia2) 0 bis 90 mol-%. Besonders bevorzugt beträgt das Verhältnis der Diole (Ia2.1) zu den Monomeren (Ia2.2) 0,1 : 1 bis 5:1, besonders bevorzugt 0,2 : 1 bis 2 : 1 oder es werden praktisch keine Diole (Ia2.2) eingesetzt.

Um die Wasserdispergierbarkeit der Polyurethane zu erreichen, sind die Polyurethane neben den Komponenten (Ia1) und (Ia2) aus von den Komponenten (Ia1) und (Ia2) verschiedenen Monomeren (Ia3), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (Ia1), (Ia2), (Ia3), (Ia4) und (Ia5) wird im allgemeinen so bemessen, daß die Molmenge der (potentiell) hydrophilen Gruppen, bezogen auf die Gewichtsmenge aller Monomere (Ia1) bis (Ia5), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Poly-($C_1$- bis $C_4$-alkylen)glycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (Ia1) bis (Ia5).

Bevorzugte Monomere mit nichtionischen hydrophilen Gruppen sind Polyethylenoxiddiole, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations- oder Hydrolysereaktionen in die oben genannten ionischen hydrophilen Gruppen überführen lassen, also z.B. Carbonsäuregruppen.

(Potentiell) ionische Monomere (Ia3) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (Ia3) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie $C_1$- bis $C_6$-Alkylhalogeniden oder Benzylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel (Ia3.1)

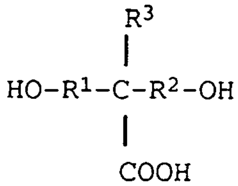

(Ia3.1)

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (IIa2) sowie die Diole (IIa1) geeignet.

Als Monomere (Ia3) mit gegenüber Isocyanaten reaktiven Aminogruppen kommen Aminocarbonsäuren wie Lysin, β-Alanin oder die in der DE-A-2034479 genannten Addukte von aliphatischen diprimären Diaminen an α,β-ungesättigte Carbon- oder Sulfonsäuren in Betracht.

Solche Verbindungen gehorchen beispielsweise der Formel (Ia3.2)

$$H_2N\text{-}R^4\text{-}NH\text{-}R^5\text{-}X \qquad \text{(Ia3.2)}$$

in der

- $R^4$ und $R^5$ unabhängig voneinander für eine $C_1$- bis $C_6$-Alkandiyl-Einheit, bevorzugt Ethylen und X für COOH oder $SO_3H$ stehen.

Besonders bevorzugte Verbindungen der Formel (IV) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie z.B. in der DE Patentschrift 1 954 090 beschrieben sind.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkaliion oder einem Ammoniumion als Gegenion vor.

Im Falle der Verwendung von Monomeren (Ia3) mit Carboxylgruppen oder solchen Gruppen, die nach der Dispergierung der Polyurethane durch Hydrolysereaktionen oder Protonierung von Carboxylatgruppen in die Carboxylgruppen übertragen werden können, wird der pH-Wert der erfindungsgemäßen wässerigen Dispersion so basisch eingestellt, daß im wesentlichen keine Carboxylgruppen mehr vorliegen sondern diese praktisch vollständig neutralisiert sind. Dies ist im allgemeinen bei pH >>pKs der Fall, es gilt:

$pH=pKs-\log c_{Säure}/c_{Salz}$.

Bevorzugt beträgt der pH mindestens 8.

Die Monomere (Ia4), die von den Monomeren (Ia1) bis (Ia3) verschieden sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der HydroxylGruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (Ia2) und (Ia4), eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (Ia4) höher als zweiwertige Isocyanate eingesetzt werden. Handelsübliche Verbindungen sind beispielsweise das Isocyanurat oder das Biuret des Hexamethylendiisocyanats.

Monomere (Ia5), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-alpha,alpha-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (Ia1) bis (Ia5) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit

Isocyanaten in einer Additionsreaktion reagieren können.

0,5 : 1 bis 2 : 1, bevorzugt 0,8 : 1 bis 1,5 : 1, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (Ia1) bis (Ia5) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (Ia1) bis (Ia5) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Meistens werden die Dispersionen nach einem der folgenden Verfahren hergestellt:

Nach dem "Acetonverfahren" wird in einem mit Wasser mischbaren und bei Normaldruck unter 100°C siedenden Lösungsmittel aus den Komponenten (Ia1) bis (Ia3) ein ionisches Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) ionisches Polyurethan, sondern zunächst ein Präpolymer hergestellt wird, das Isocyanat-Gruppen trägt. Die Komponenten werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen, die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Aminogruppen hydrolysiert, die mit noch verbliebenen Isocyanatgruppen der Präpolymere unter Kettenverlängerung abreagieren.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% auf und sind besonders bevorzugt frei von Lösungsmitteln.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 $s^{-1}$).

Hydrophobe Hilfsmittel, die unter Umständen nur schwierig homogen in der fertigen Dispersion zu verteilen sind wie beispielsweise Phenol-Kondensationsharze aus Aldehyden und Phenol bzw. Phenolderivaten oder Epoxidharze und weitere z.B. in der DE-A-3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Nach einer Variante der Erfindungen liegen in der dispersen Phase P.I das hydrophile Polyurethan Ibi und ein Carbodiimid Ibii in Form einer physikalischen Mischung vor.

Das Polyurethan Ibi kann genauso aufgebaut sein wie das Polyurethan Ia mit dem Unterschied, daß das Polyurethan Ibi keine wirksamen Mengen an Carbodiimid-Gruppen trägt.

Entsprechend ist das Polyurethan Ibi üblicherweise aufgebaut aus

Ibi1) Diisocyanaten, die frei sind von Carbodiimid-Struktureinheiten,

Ibi2) Diolen, von denen

Ibi2.1) 10 bis 100 mol-%, bezogen auf die Gesamtmenge der Diole (Ibi2), ein Molekulargewicht von 500 bis 5000 aufweisen, und

Ibi2.2) 0 bis 90 mol-%, bezogen auf die Gesamtmenge der Diole (Ibi2), ein Molekulargewicht von 60 bis 500 g/mol aufweisen,

Ibi3) von den Monomeren (Ibil) und (Ibi2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,

Ibi4) gegebenenfalls weiteren von den Monomeren (Ibi1) bis (Ibi3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und

Ibi5) gegebenenfalls von den Monomeren (Ibi1) bis (Ibi4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Als Aufbaukomponenten (Ibi1) kommen insbesondere die als (Ia1.2) bezeichneten Verbindungen in Betracht, als Aufbaukomponenten (Ib2) die als (Ia2), als Aufbaukomponenten (Ibi3) die als (Ia3), als Aufbaukomponenten kommen (Ibi4) die als (Ia4), und als Aufbaukomponentenkommen (Ibi 5) die als (Ia5) bezeichneten Verbindungen.

Das Carbodiimid Ibii trägt im wesentlichen keine hydrophilen Gruppen, die die Wasserdispergierbarkeit bewirken, d.h. es trägt im wesentlichen keine ionischen Gruppen oder hydrophile Polyalkylenoxidreste, wie sie die Monomere Ia3 bzw. Ibi3 tragen. Geeignete Carbodiimide Ibii sind beispielsweise solche der allgemeinen Formel Ibii1

$$R^d - \left( R^c - N = C = N - R^c \right)_m - R^d \qquad \text{Ibii1}$$

mit

m: einer Zahl von 2 bis 20

$R^c$: wie bei der allgemeinen Formel Ia1.1.1 definiert

$R^d$: $-NH_2$

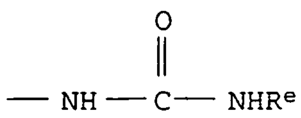

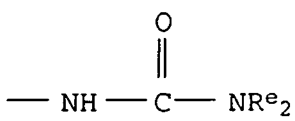

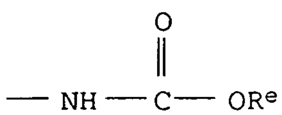

$-N{=}C{=}N-R^e$

und $R^e$ unabhängig von einander $C_1$- bis $C_{20}$- Alkyl, $C_5$- bis $C_{12}$-Cycloalkyl, $C_6$- bis $C_{20}$-Aryl oder $C_7$- bis $C_{20}$- Aralkyl bedeutet, wobei 1 bis 4 Wasserstoffatome der Reste $R^e$ durch gegenüber Carbodiimidgruppen inerten Substituenten substituiert sein können.

Unter diesen Verbindungen sind solche der allgemeinen Formeln Ibii2 und Ibii3 bevorzugt

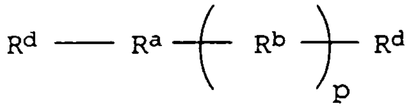

Ibii2

wobei $R^a$, $R^b$ und $R^d$ die in den Formeln Ia1.1.2 und Ibii1 angegebene Bedeutung hat und p für eine Zahl von 2 bis 20 steht

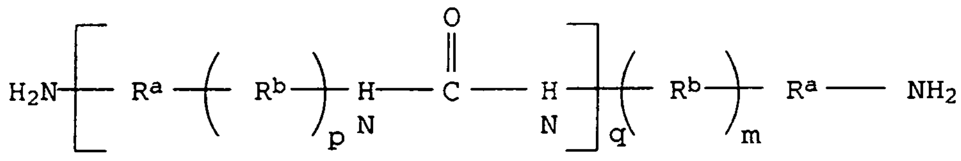

Ibii3

und wobei $R^a$ und $R^b$ die in der Formel Ia1.1.2 angegebene Bedeutung hat, p für eine Zahl von 2 bis 20 und q für eine Zahl von 1 bis 10 steht.

Die Carbodiimide Ibii mit endständigen Harnstoff- oder Urethangruppen lassen sich beispielsweise durch Umsetzung von Verbindungen der Formel Ia1.1.1 mit den entsperechenden Alkoholen oder Aminen herstellen.

Derartige Verbindungen sind bekannt und beispielsweise in der EP-A-628 541 beschrieben.

Die Carbodiimide Ibii mit endständigen Gruppen des Typs -N=C=N-$R^e$ sind erhältlich, indem man Verbindungen der Formel Ia1.1.1 mit den entsprechenden Monoisocyanaten kondensiert oder indem man die Diisocyanate, aus denen man die Verbindungen der Formel Ia1.1.1. aufbaut gemeinsam mit den Monoisocyanaten cocondensiert. Bevorzugt sind Phenylisocyanat, Cyclohexylisocyanat oder m-Isopropenyl-alpha-alpha-dimethylbenzylisocyanat (TMI).

Die Herstellung einer wässerigen Dispersion, die eine disperse Phase I enthält, in der das Polyurethan Ibi und das Carbodiimid Ibii in Form einer physikalischen Mischung vorliegen, kann beispielsweise so erfolgen wie die Herstellung der Polyurethane Ia, die ein hydrophobes Hilfsmittel enthalten. Das bedeutet, daß man das Carbodiimid Ibii, sofern es keine gegenüber Isocyanaten reaktiven Gruppen wie alkoholische Hydroxy- oder primäre und sekundäre Aminogruppen trägt, zu einem beliebigen Zeitpunkt der Reaktionsmischung, aus der das Polyurethan Ibi gebildet wird, hinzufügen kann mit der Maßgabe, daß die Zumischung vor der Dispergierung des Polyurethans Ibi in Wasser erfolgt. Trägt das Carbodiimid Ibii gegenüber Isocyanaten reaktive Gruppen erfolgt die Zugabe jedoch erst dann, nachdem die Reaktionsmischung ausreagiert ist, d.h. praktisch keine NCO-Gruppen mehr enthält.

Weiterhin ist es möglich, anstelle der Carbodiimide Ibii die Monomere Ia1.1 einzusetzten, vorausgesetzt, daß deren Zugabe erfolgt, nachdem die Reaktionsmischung aus den Monomeren Ibi1 bis Ibi5 ausreagiert ist. In diesem Fall reagieren die Isocyanatgruppen der Monomere Ia1.1 mit Wasser zu Aminogruppen ab und gegebenfalls reagieren diese Aminogruppen mit weiteren Isocyanatgruppen weiterer Moleküle der Monomere Ia1.1 unter Bildung von Harnstoffgruppen zu kettenverlängerten Molekülen.

Als Polymer (P), das in der dispersen Phase (P.II) enthalten ist, kommen Polymere in Betracht, die abgeleitet sind von

II.1) 30 bis 99,98, bevorzugt 50 bis 99,8, besonders bevorzugt 80 bis 98 Gew.-% Hauptmonomere ausgewählt aus $C_1$- bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

II.2) 0,01 bis 20, bevorzugt 0,1 bis 10, besonders bevorzugt 1 bis 8 Gew.-% einer Carbonsäure mit einer olefinischen Doppelbindung und

II.3) 0,01 bis 10, bevorzugt 0,1 bis 8, besonders bevorzugt 1 bis 5 Gew.-% eines von den Monomeren II.1 und II.2 verschiedenen Monomeren, ausgewählt aus der Gruppe bestehend aus N-Methylol(meth)acrylamid (AMOL), (MAMOL), Acetoacetoxy-ethyl-(meth)acrylat; Diaceton(meth)acrylamid; Gycidyl(meth)acrylat; Ureido-(meth)acrylat; (Meth)acrylsäureanhydrid,

II.4) ggf. von (II.1), (II.2) und (II.3) verschiedenen radikalisch polymerisierbaren Monomeren.

Im Zusammenhang mit den Polymeren (IIb) steht (Meth)acryl- verkürzend für Methacryl- oder Acryl-.

Damit die Polymere P.II eine disperse Phase P.II bilden, weisen die Polymere P.II im allgemeinen bei einer

Temperatur von 25°C in der kohärenten wässrigen Phase der erfindungsgemäßen Dispersion eine Löslichkeit von weniger als 1 g/l auf.

Die Polymere (II) sind bevorzugt aus folgenden Monomeren aufgebaut.

Als Monomere (II.1) zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, alpha- und p-Methylstyrol, alpha-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren (II.1) werden auch vorzugsweise im Gemisch eingesetzt.

Vinylaromatische Verbindungen wie Styrol werden z.B. häufig im Gemisch mit $C_1$-$C_{20}$-Alkyl(meth)acrylaten, insbesondere mit $C_1$-$C_8$-Alkyl(meth)acrylaten, oder nicht aromatischen Kohlenwasserstoffen wie Isopren oder vorzugsweise Butadien eingesetzt.

Als Monomere (II.2) kommen vorzugsweise (Meth)acrylsäure oder Maleinsäure in Betracht.

Als Monomere (II.4) kommen z.B. in Betracht: Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl-(meth)acrylat oder Acrylsäureester von heterocyclischen Alkoholen wie Furfuryl(meth)acrylat.

Darüber hinaus kommen als Monomer (II.4) noch Monomere mit Aminooder Amidgruppen wie (Meth)acrylamid, sowie deren am Stickstoff mit $C_1$-$C_4$-Alkyl substituierten Derivate, in Betracht.

Von Bedeutung als Monomere (II.4) sind insbesondere hydroxyfunktionelle Monomere, z.B. (Meth)acrylsäure-$C_1$-$C_{15}$-alkylester, welche durch ein oder zwei Hydroxygruppen substituiert sind. Insbesondere von Bedeutung als hydroxyfunktionelle Comonomere sind (Meth)acrylsäure-$C_2$-$C_8$- hydroxyalkylester, wie n-Hydroxyethyl-, n-Hydroxypropyl- oder n-Hydroxybutyl(meth)acrylat.

Die Herstellung des Polymers (II) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxid, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan, sie können z.B. in Mengen von 0 bis 0,5 Gew.-%, bezogen auf das Copolymerisat, zusätzlich eingesetzt werden.

Die Art und Menge der Comonomeren wird vorzugsweise so gewählt, daß das erhaltene Copolymerisat eine Glasübergangstemperatur von -60 und +140°C, vorzugsweise -60 und +100°C aufweist. Die Glasübergangstemperatur des Copolymerisats wird durch Differentialthermoanalyse oder Differential Scanning Calorimetrie nach ASTM 3418/82, bestimmt.

Das zahlenmittlere Molekulargewicht $M_n$ beträgt vorzugsweise $10^3$ bis $5 \cdot 10^6$, besonders bevorzugt $10^5$ bis

$2 \cdot 10^6$ (bestimmt durch Gelpermeationschromatographie mit Polystyrol als Standard).

Besonders einfach lassen sich die erfindungsgemäßen Dispersionen herstellen, indem man Dispersionen, die die dispersen Phasen (I) und (II) getrennt enthalten, herstellt und sie anschließend miteinander vermischt. Die Vermischung ist unkritisch und kann beispielsweise so vorgenommen werden, daß man eine Dispersion in die andere einrührt. Die Vermischung kann zu einem beliebigen Zeitpunkt vor deren Anwendung erfolgen.

Die erfindungsgemäßen Polyurethandispersionen können weitere wasseremulgierbare oder -dispergierbare Harze, wie Polyurethane, Polyester-, Epoxyd- oder Alkydharze sowie handelsübliche Hilfsund Zusatzstoffe wie Treibmittel, Entschäumer, Emulgatoren, Verdickungsmittel und Thixotropiermittel, Farbmittel wie Farbstoffe und Pigmente enthalten. Üblicherweise enthalten die erfindungsgemäßen Dispersionen jedoch keine wirksamen Mengen an Melamin, Kaolin oder Flammschutzmittel.

Sie eignen sich sich beispielsweise zum Verkleben oder Beschichten unterschiedlicher Substrate wie Holz, Metall, Kunststoffen, Papier, Leder oder Textil, für die Imprägnierung von Textilien sowie für die Herstellung von Formkörpern und Druckfarben.

Die Verarbeitung der erfindungsgemäßen Polyurethandispersionen kann dabei nach den in der Klebstoff, Leder- oder Lackindustrie allgemein üblichen Verfahren erfolgen, also indem man die Dispersionen auf das Substrat sprüht, walzt oder rakelt und anschließend trocknet.

Für den Fall der Verarbeitung als Klebstoff werden die beschichteten Werkstücke entweder vor dem Trocknen des Dispersionsfilms oder nach dem Trocknen mit einem anderen Werkstück bevorzugt unter Anwendung von Druck zusammengefügt.

Besonders feste Klebstoffverbunde erhält man, wenn man Werkstücke, die mit einem getrockneten Klebstofffilm versehen sind, unmittelbar vor, während oder nach dem Zusammenfügen auf eine Temperatur von ca. 50 bis 100°C erwärmt.

Die nach diesen Methoden hergestellten Klebstoffverbunde zeichnen sich insbesondere dadurch aus, daß sie lagerbeständig sind und sich mit ihnen Verklebungen mit einer hohen Wärmestandfestigkeit herstellen lassen.

Experimenteller Teil

Abkürzungen:

| | |
|---|---|
| Tl = | Teile |
| CDI = | Carbodiimidgruppen |
| OHZ = | Hydroxylzahl |
| TDI = | Toluylendiisocyanat |
| HDI = | Hexamethylendiisocyanat |
| DBTL = | Dibutylzinndilaurat |
| DMPA = | Dimethylolpropionsäure |
| VE-Wasser = | Entiontes Wasser |
| RT = | Raumtemperatur |

In den Beispielen wurde das Carbodiimid der folgenden Formel verwendet,

$$OCN\text{-}(R^C\text{-}N{=}C{=}N)_n\text{-}R^C\text{-}NCO \qquad (Ia1.1.1)$$

bei dem m im statistischen Mittel ungefähr 4 bedeutet.

Die Viskositäten der Dispersionen wurden bei einer Temperatur von 20°C und einer Schergeschwindigkeit von $250 s^{-1}$ mit einem Rotations-Rheometer mit konzentrischen Zylindern (Spindeldurchmesser 38,7 mm, Becherdurchmesser: 42,0 mm) vermessen.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = \frac{\text{IntensitätDisp.x 100}}{\text{IntensitätWasser}}$$

Bestimmung des K-Wertes

Der K-Wert ist ein Maß für das Molekulargewicht eines Polymers und wurde nach der Methode ermittelt, wie sie in Kirk-Othmer, Encyclopedia of Chemical Technology, 3 rd Edition, Verlag John Wiley & Sons, Inc., volume 23, S. 967 beschrieben ist.

A Herstellung der Dispersionen

A1 Herstellung der Ausgangsdispersionen

A1.1 Herstellung der Ausgangsdispersionen des Typs (I)

Herstellbeispiel 1:

720,8 g eines Polyesters aus Adipinsäure und Butandiol-1,4 (OHZ=46), 0,15 g DBTL wurden in 300 g Aceton mit 70,6 g HDI 1 h 48 min bei 65°C umgesetzt. Dann wurde mit 700 g Aceton verdünnt und auf 50°C abgekühlt. Der NCO-Gehalt betrug 0,6%. Es wurde mit 42,2 g einer 50%igen wässrigen Lösung des Aminoethyl-aminoethansulfonsäureNa-Salzes und 40 g VE-Wasser kettenverlängert. Nach 15 min wurden 30 g eines NCO- terminierten Polycarbodiimids des Tetramethylxylylendiisocyanates mit 8% NCO und 15% CDI zugesetzt und mit 1200 g VE-Wasser dispergiert. Das Aceton wurde im Vakuum bei Temperaturen bis 43°C abdestilliert und der Feststoffgehalt auf 40% eingestellt.

Analysenwerte: LD: 95 Visk.: 40 mPas K-Wert: 71 pH: 8,7

Herstellbeispiel 2:

720,8 g eines Polyesters aus Adipinsäure und Butandiol-1,4 (OHZ=46), 0,15 g DBTL wurden in 300 g Aceton mit 70,6 g HDI 1 h 46 min bei 65°C umgesetzt. Dann wurde mit 700 g Aceton verdünnt und auf 50°C abgekühlt. Der NCO-Gehalt betrug 0,6%. Es wurde mit 42,2 g einer 50%igen wässrigen Lösung des Aminoethyl-aminoethansulfonsäureNa-Salzes und 40 g VE-Wasser kettenverlängert. Nach 15 min wurden 60 g eines NCO- terminierten Polycarbodiimids des Tetramethylxylylendiisocyanates mit 8% NCO und 15% CDI zugesetzt und mit 1200 g VE-Wasser dispergiert. Das Aceton wurde im Vakuum bei Temperaturen bis 43°C abdestilliert und der Feststoffgehalt auf 40% eingestellt.

Analysenwerte: LD: 89 Visk.: 67 mPas K-Wert: 79 pH: 8,7

Herstellbeispiel 3:

720,8 g eines Polyesters aus Adipinsäure und Butandiol-1,4 (OHZ=46), 0,15 g DBTL wurden in 300 g Aceton mit 70,6 g HDI 1 h 58 min bei 65°C umgesetzt. Dann wurde mit 700 g Aceton verdünnt und auf 50°C abgekühlt. Der NCO Gehalt betrug 0,55%. Es wurde mit 42,2 g einer 50%igen wässrigen Lösung des Aminoethyl-aminoethansulfonsäureNa-Salzes und 40 g VE-Wasser kettenverlängert. Nach 15 min wurden 80 g eines NCO- terminierten Carbodiimids des Tetramethylxylylendiisocyanates mit 8% NCO und 15% CDI in 80 g Aceton zugesetzt und mit 1200 g VE-Wasser dispergiert. Das Aceton wurde im Vakuum bei Temperaturen bis 43°C abdestilliert und der Feststoffgehalt auf 40% eingestellt.

Analysenwerte: LD: 86 Visk.: 36 mPas K-Wert: 64 pH: 6,9

A2 Abmischung der Dispersionen

Die PU-Dispersionen aus Herstellbeispiel 1-3 wurden im Verhältnis 7:3 f/f mit einer Dispersion gemischt, die wie folgt aufgebaut ist: Mix 1 bis Mix 3 (erfindungsgemäß)

| | |
|---|---|
| 80 % | Ethylacrylat |
| 10 % | Methylmethacrylat |
| 5 % | Acrylnitril |
| 4 % | Methacrylsäure |
| 1 % | N-Methylolmethacrylamid |

Emulgator: Steinapol NLS
Feststoffgehalt 40%;

Die Dispersionen wurden ebenso mit einer Dispersion gemischt, die wie folgt ohne N-Methylolacrylamid aufgebaut war: Mix 1v bis Mix 3v (zum Vergleich)

| | |
|---|---|
| 81 % | Ethylacrylat |
| 10 % | Methylmethacrylat |
| 5 % | Acrylnitril |
| 4 % | Methacrylsäure |

Emulgator: Steinapol NLS
Feststoffgehalt 40%;

B. Durchführung der anwendungstechnischen Prüfungen

B.1 Sofortschälfestigkeit bei verschiedenen Preßtemperaturen Buchenholz / Möbelfolie

| | |
|---|---|
| Geräte: | Spritzpistole / 1,8mm Düse<br>Beheizbare Presse<br>Zeitmeßgerät<br>500 g Gewichte<br>Umlufttrockenschrank |
| Substrat: | Buchenholz<br>PVC-Möbelfolie Roxan® N 509 Typ 670211 Flex HZ Mahagony |
| Abmessung: | 150 x 50 mm |
| Verklebungsfläche: | 120 x 50 mm |
| Auftrag: | 70 - 90 $g/m^2$ naß auf Buchenholz sprühen |
| Ablüftezeit: | mindestens 60 Minuten bei RT |
| Verklebungsweise: | Warmverpressung bei 80°C<br>nur Möbelfolie-Seite |
| Preßdruck: | 0,5 $N/mm^2$ |
| Preßdauer: | 10 s |
| Probenlagerung: | 3 Minuten bei 80° C sofort nach Kaschierung |
| Prüftemperatur: | 80° C |
| Prüfbelastung: | 500 g bis 3000 g |
| Prüfdauer: | 5 Minuten je Prüfbelastung / bis 30 Minuten |
| Abschälwinkel: | 180 Grad |
| Anzahl der Proben: | 5 |
| Auswertung: | Meßstrecke bei der jeweiligen Prüfbelastung |

Verfahrensweise:

Auf Buchenholz wird der Klebstoff (ohne Vernetzer) mittels Spritzpistole aufgebracht. Nach mindestens 60 Minuten Trocknung bei RT wird die Möbelfolie in der Presse auf das Buchenholz kaschiert. Sofort nach der Kaschierung und anschließender Temperierung (3 Minuten bei 80 °C) werden die Prüfkörper einer Wärmebelastung unterzogen. Begonnen wird mit 500g Belastung. Erfolgte nach 5 Minuten noch keine vollständige Abschälung, wird die Belastung nach jeweils 5 Minuten um weitere 500g erhöht, bis die Möbelfolie entweder auf einer Strecke von > 20mm abgeschält ist oder eine Gesamtbelastung von 3000 g erreicht ist.

B.2 Statische Schälfestigkeit in der Wärme "Aufsteigender Wärmetest" Buchenholz/MDF/Möbelfolie

| | |
|---|---|
| Geräte: | Zahnspachtel (1 x 1 mm Zahnung)<br>Beheizbare Presse<br>Zeitmeßgerät<br>1 000 g Gewichte<br>Fugentemperaturmessfühler<br>Umlufttrockenschrank |
| Substrat: | Buchenholz/Möbelfolie (PVC) |
| Abmessung: | 150 x 50 mm |
| Verklebungsfläche: | 100 x 50 mm |
| Auftrag: | Zahnspachtel (Zahnung 1 x 1 mm)<br>auf Buchenholz in Längsrichtung |
| Ablüftezeit: | 60 Minuten bei Raumtemperatur |
| Verklebungsweise: | Warmverpressung bei einer Fugentemperatur von 75-79 °C |
| | Preßplattentemperatur oben: ca. 88°C |
| Preßdruck: | 0,5 $N/mm^2$ |
| Preßdauer: | 30 Sekunden |
| Probenlagerung: | 1 Woche bei Raumtemperatur |
| Prüftemperatur: | 50° C bis 100° C - in 5° C Schritten alle<br>30 Minuten |
| Prüfbelastung: | 1 000 g |
| Prüfdauer: | 30 Minuten je Prüftemperatur |
| Abschälwinkel: | 90 Grad |
| Anzahl der Proben: | 4 |
| Auswertung: | Ablaufstrecke bei der jeweiligen<br>Prüftemperatur |

Verfahrensweise:

Der zu prüfende Klebstoff wird mit der Zahnspachtel in Längsrichtung auf das Buchenholz aufgetragen. Nach der Ablüftzeit von 60 Minuten bei Raumtemperatur wird die Möbelfolie in der Presse auf die beschichtete Seite des Buchenholzes kaschiert. Nach Lagerung der Kaschierungen über 1 Woche bei Raumtemperatur werden die Prüfkörper mit einem 1 000 g-Gewicht in einem Abschälwinkel von 90° im Trockenschrank geprüft.

Die Prüfung beginnt bei 50°C. Erfolgte nach 30 Minuten noch keine vollständige Abschälung, wird die abgeschälte Prüfstrecke markiert und die Temperatur alle 30 Minuten um jeweils 5°C erhöht.

Die Prüfung ist beendet, wenn die Ablaufstrecke bei der jeweiligen Prüftemperatur > 10 mm ist, oder bei Erreichen einer Temperatur von 100 °C oder bei sehr starker Dehnung der Folie.

| | |
|---|---|
| Auswertung | Anzugeben ist die abgeschälte Prüfstrecke<br>bei der jeweiligen Temperatur. |

B3 Blockfestigkeit

| | |
|---|---|
| Geräte: | Spritzpistole/1,8 mm Düse<br>2 kg Gewichte |
| Substrat: | MDF 150 x 150 mm |

(fortgesetzt)

| | |
|---|---|
| Verklebungsfläche: | 120 x 50 mm |
| Auftrag: | 70-90 $g/m^2$ naß auf MDF sprühen |
| Ablüftzeit: | 60 Minuten bei Raumtemperatur |

Verfahrensweise:

Auf MDF wird der Klebstoff mittels Spritzpistole aufgebracht. Nach 60 Minuten Ablüftzeit werden jeweils 5 Probekörper übereinander gestapelt und als Abschluß ein sechster ohne Kleberauftrag oben aufgelegt. Dieser Stapel wird dann mit 2 kg belastet. Nach 24 Stunden wird geprüft ob die MDF-Teile miteinander verklebt sind.

C Prüfergebnisse

Die Prüfergebnisse sind in der folgenden Tabelle zusammengefaßt

| Beispiel | Sofortfestigkeit | WSF sofort | WSF nach 8h offener Zeit | Blockfestigkeit |
|---|---|---|---|---|
| Mix 1 | 2,8 kg | 93 | 88 | T |
| Mix 2 | 3,0 kg | 85 | 85 | T |
| Mix 3 | 3,0 kg | 93 | 93 | T |
| Mix 1v | 3,0 kg | 83 | 83 | K |
| Mix 2v | 3,0 kg | 90 | 90 | K |
| Mix 3v | 3,0 kg | 88 | 85 | K |
| "V" = Vergleichsversuch<br>"T" = Kraftlos trennbar<br>"K" = Verklebt | | | | |

Die Beispiele und die Vergleichsbeispiele zeigen, daß die erfindungsgemäßen Dispersionen, was Sofortfestigkeit, Wärmestandfestigkeit und offene Zeit betrifft, mit denen des Standes der Technik vergleichbar sind, hinsichtlich der Blockfestigkeit jedoch deutliche Vorteile aufweisen.

## Patentansprüche

**1.** Latent vernetzende wässerige Polyurethandispersionen, enthaltend

I) eine disperse Phase (P.I), enthaltend

Ia) ein Polyurethan (Ia), das neben hydrophilen Gruppen, die die Wasserdispergierbarkeit bewirken, Carbodiimid-Gruppen trägt und im wesentlichen keine Carboxylgruppen trägt
oder
Ib) eine physikalische Mischung aus

Ibi) einem Polyurethan (Ibi), das hydrophile Gruppen, die die Wasserdispergierbarkeit bewirken, trägt und im wesentlichen keine Carbodiimid oder Carboxylgruppen trägt, und
Ibii) einem Carbodiimid (Ibii), das im wesentlichen keine hydrophilen Gruppen, die die Wasserdispergierbarkeit bewirken, trägt,

und
II) eine disperse Phase (P.II), enthaltend ein sonstiges Polymer (II), das im wesentlichen keine Carbodiimid-Gruppen trägt und im wesentlichen abgeleitet ist von

II.1) 30 bis 99,98 Gew.-% Hauptmonomere ausgewählt aus $C_1$- bis $C_{20}$-Alkyl(meth)acrylaten, Vinylestern

von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
II.2) 0,01 bis 20 Gew.-% einer Carbonsäure mit einer olefinischen Doppelbindung und
II.3) 0,01 bis 10 Gew.-% eines von den Monomeren II.1 und II.2 verschiedenen Monomeren, ausgewählt aus der Gruppe bestehend aus N-Methylol(meth)acrylamid (AMOL), (MAMOL), Acetoacetoxy-ethyl-(meth) acrylat; Diaceton(meth)acrylamid; Glycidyl(meth)acrylat; Ureido-(meth)acrylat; (Meth)acrylsäureanhydrid,
II.4) ggf. von (II.1), (II.2) und (II.3) verschiedenen radikalisch polymerisierbaren Monomeren

**2.** Wässerige Dispersionen nach Anspruch 1, wobei die Carbodiimid-Gruppen in das Polyurethan (Ia) eingeführt werden über Polyisocyanate (Ia1) der allgemeinen Formel Ia1.1.1

$$OCN\text{-}(R^c\text{-}N{=}C{=}N)_n\text{-}R^c\text{-}NCO \qquad (Ia1.1.1)$$

in der $R^c$ für einen zweiwertigen, ggf. Harnstoff-, Urethan-, Ester-, und/oder Ethergruppen aufweisenden Kohlenwasserstoffrest, wie er durch Entfernung der Isocyanatgruppen aus einem einfachen organischen Isocyanat oder einem Urethangruppen und ggf. Ether- oder Estergruppen aufweisenden Präpolymer, das endständig Isocyanatgruppen trägt, erhalten wird, wobei bei Vorliegen von mehreren Resten $R^c$ im gleichen Molekül gleichzeitig auch unterschiedliche, der genannten Definition entsprechende Reste $R^c$ vorliegen können und n für eine ganze oder (im statistischen Mittel) gebrochene Zahl von 1 bis 20, vorzugsweise von 2 bis 10, steht.

**3.** Wässerige Dispersionen nach Anspruch 1 oder 2, wobei die Carbodiimid-Gruppen in das Polyurethan (Ia) eingeführt werden über Polyisocyanate (Ia1) der allgemeinen Formel Ia1.1.2

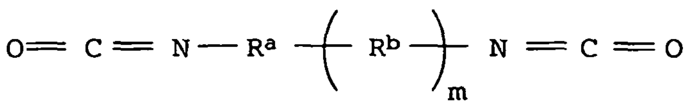

Ia1.1.2

mit

$R^a$: eine Gruppe der Formel Ia1.1.2.1

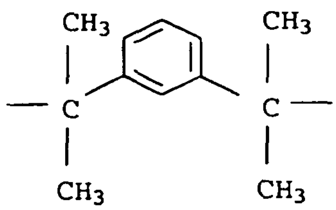

Ia1.1.2.1

$R^b$: eine Gruppe der Formel Ia1.1.2.2

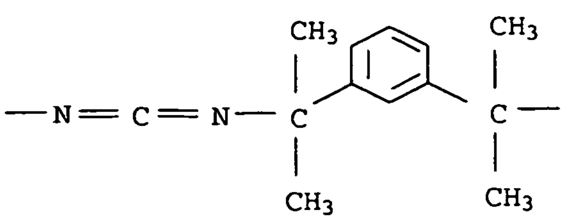

Ia1.1.2.2

und
m: eine Zahl von 1 bis 20

**4.** Wässerige Dispersionen nach den Ansprüchen 1 bis 3, wobei die Phase (P.I) im wesentliche gebildet wird aus einem Polyurethan (Ia), das aufgebaut ist aus

Ia1) Diisocyanaten, die

Ia1.1) Carbodiimid-Gruppen enthalten und
gegebenenfalls solchen,
Ia1.2) die frei sind von Carbodiimid-Gruppen,

Ia2) Diolen, von denen

Ia2.1) 10 bis 100 mol-%, bezogen auf die Gesamtmenge der Diole (Ia2), ein Molekulargewicht von 500 bis 5000 aufweisen, und
Ia2.2) 0 bis 90 mol-%, bezogen auf die Gesamtmenge der Diole (Ia2), ein Molekulargewicht von 60 bis 500 g/mol aufweisen,

Ia3) von den Monomeren (Ia1) und (Ia2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
Ia4) gegebenenfalls weiteren von den Monomeren (Ia1) bis (Ia3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
Ia5) gegebenenfalls von den Monomeren (Ia1) bis (Ia4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**5.** Wässerige Dispersionen nach den Ansprüchen 1 bis 4, wobei das Polyurethan (Ibi) aufgebaut ist aus

Ibi1) Diisocyanaten, die frei sind von Carbodiimid-Gruppen,
Ibi2) Diolen, von denen

Ibi2.1)10 bis 100 mol-%, bezogen auf die Gesamtmenge der Diole (Ibi2), ein Molekulargewicht von 500 bis 5000 aufweisen, und
Ibi2.2)0 bis 90 mol-%, bezogen auf die Gesamtmenge der Diole (Ibi2), ein Molekulargewicht von 60 bis 500 g/mol aufweisen,

Ibi3) von den Monomeren (Ibi1) und (Ibi2) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
Ibi4) gegebenenfalls weiteren von den Monomeren (Ibi1) bis (Ibi3) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
Ibi5) gegebenenfalls von den Monomeren (Ibi1) bis (Ibi4) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

**6.** Wässerige Dispersionen nach den Ansprüchen 1 bis 4, wobei es sich bei dem Carbodiimid Ibii um eines der allgemeinen Formel Ibii1 handelt

$$R^d - \left( R^c - N = C = N - R^c \right)_m - R^d \qquad \text{Ibii1}$$

mit

m: einer Zahl von 2 bis 20
$R^c$: wie bei der allgemeinen Formel Ia1.1.1 definiert
$R^d$: $-NH_2$

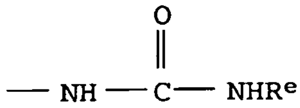

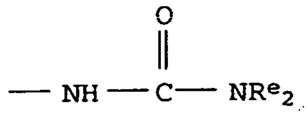

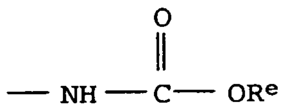

$-N=C=N-R^e$

und $R^e$ unabhängig von einander $C_1$- bis $C_{20}$- Alkyl, $C_5$- bis $C_{12}$- Cycloalkyl, $C_6$- bis $C_{20}$-Aryl oder $C_7$- bis $C_{20}$-Aralkyl bedeutet, wobei 1 bis 4 Wasserstoffatome der Reste $R^e$ durch gegenüber Carbodiimidgruppen inerten Substituenten substituiert sein können.

**7.** Wässerige Dispersionen nach Anspruch 5, wobei es sich bei dem Carbodiimid Ibii1 um eines der allgemeinen Formel Ibii2

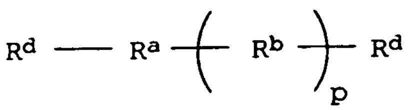 Ibii2

wobei $R^a$, $R^b$ und $R^d$ die in den Formeln Ial.1.2 und Ibii1 angegebene Bedeutung hat und p für eine Zahl von 2 bis 20 steht oder
der allgemeinen Formel Ibii3

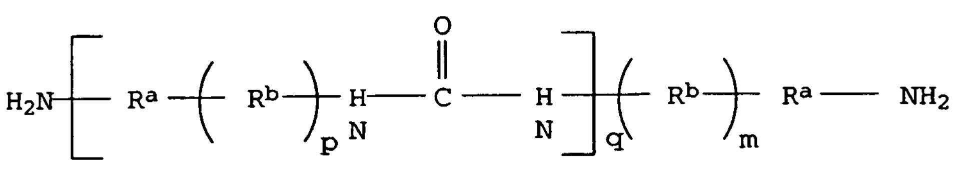 Ibii3

wobei $R^a$ und $R^b$ die in der Formel Ial.1.2 angegebene Bedeutung hat, p für eine Zahl von 2 bis 20 und q für eine Zahl von 1 bis 10 steht, handelt.

**8.** Wässerige Dispersionen nach den Ansprüchen 1 bis 7, wobei die Phase (P.II) im wesentliche gebildet wird aus einem Polymer (II), welches abgeleitet ist von $C_1$- bis $C_{20}$-Alkyl(meth)acrylaten und gegebenenfalls Acrylnitril als Monomere (II.1) und (Meth)acrylsäure als Monomer (II.2).

**9.** Verwendung der Dispersionen nach den Ansprüchen 1 bis 8 als Imprägnierungsmittel, Beschichtungsmittel oder Klebstoff.

**10.** Gegenstände aus Holz, Metall, Textil, Leder oder Kunststoff, die mit einer wässerigen Dispersion nach den Ansprüchen 1 bis 8 verklebt, imprägniert oder beschichtet sind.

## Claims

**1.** A latently crosslinking aqueous polyurethane dispersion, comprising

I) a disperse phase (P.I) comprising

Ia) a polyurethane (Ia) which, in addition to hydrophilic groups which produce water dispersibility, carries carbodiimide groups and substantially no carboxyl groups
or
Ib) a physical mixture of

Ibi) a polyurethane (Ibi) which carries hydrophilic groups which produce water dispersibility and carries substantially no carbodiimide or carboxyl groups, and
Ibii) a carbodiimide (Ibii) which carries substantially no hydrophilic groups which produce water dispersibility,

and
II) a disperse phase (P.II) comprising another polymer (II) which carries substantially no carbodiimide groups and is substantially derived from

II.1) from 30 to 99.98% by weight of main monomers selected from $C_1$- to $C_{20}$-alkyl (meth)acrylates, vinyl esters of carboxylic acids comprising up to 20 carbon atoms, vinylaromatics of up to 20 carbon atoms, ethylenically unsaturated nitriles, vinyl halides and aliphatic hydrocarbons having 2 to 8 carbon atoms and 1 or 2 double bonds,
II.2) from 0.01 to 20% by weight of a carboxylic acid having an olefinic double bond and
II.3) from 0.01 to 10% by weight of a monomer differing from the monomers II.1 and II.2 and selected from the group consisting of N-methylol (meth)acrylamide (AMOL), (MAMOL), acetoacetoxyethyl (meth) acrylate, diacetone (meth)acrylamide, glycidyl (meth)acrylate, ureido (meth)acrylate and (meth)acrylic anhydride, and
II.4) if appropriate, monomers differing from (II.1), (II.2) and (II.3) and capable of free radical polymerization.

**2.** The aqueous dispersion according to claim 1, wherein the carbodiimide groups are introduced into the polyurethane (Ia) via polyisocyanates (Ia1) of the formula Ia1.1.1

$$OCN\text{-}(R^c\text{-}N{=}C{=}N)_n\text{-}R^c\text{-}NCO \qquad (Ia1.1.1)$$

where $R^c$ is a divalent hydrocarbon radical which may have, if appropriate, urea, urethane, ester and/or ether groups, as is obtained by removing the isocyanate groups from a simple organic isocyanate or from a prepolymer having urethane groups and, if appropriate, ether or ester groups and carrying terminal isocyanate groups, where, with the presence of a plurality of radicals $R^c$ simultaneously in the same molecule, different radicals $R^c$ corresponding to said definition may also be present, and n is an integer or (as a statistical average) a fraction from 1 to 20, preferably from 2 to 10.

**3.** The aqueous dispersion according to claim 1 or 2, wherein the carbodiimide groups are introduced into the polyurethane (Ia) via polyisocyanates (Ia1) of the formula Ia1.1.2

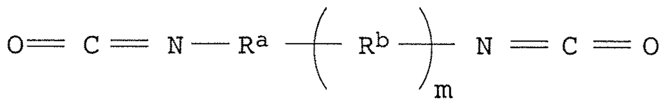

Ia1.1.2

where

$R^a$ is a group of the formula Ia1.1.2.1

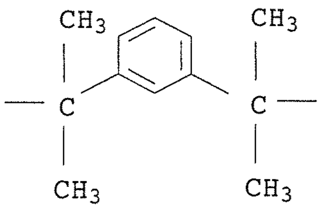

Ia1.1.2.1

$R^b$ is a group of the formula Ia1.1.2.2

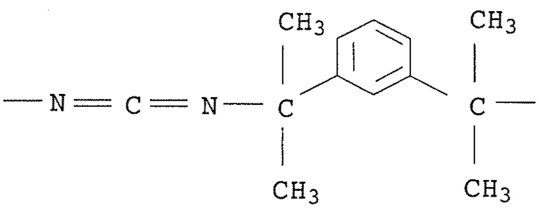

Ia1.1.2.2

and
m is from 1 to 20.

**4.** The aqueous dispersion according to claims 1 to 3, wherein the phase (P.I) is substantially formed from a polyurethane (Ia) which is composed of

Ia1) diisocyanates which

Ia1.1) comprise carbodiimide groups and,
if appropriate, those
Ia1.2) which are free of carbodiimide groups,

Ia2) diols, of which

Ia2.1) from 10 to 100 mol %, based on the total amount of the diols (Ia2), have a molecular weight of from 500 to 5 000 and
Ia2.2) from 0 to 90 mol %, based on the total amount of the diols (Ia2), have a molecular weight of from 60 to 500 g/mol,

Ia3) monomers differing from the monomers (Ia1) and (Ia2) and having at least one isocyanate group or at least one group reactive toward isocyanate groups, which moreover carry at least one hydrophilic group or one potentially hydrophilic group, which produce water dispersibility of the polyurethanes,
Ia4) if appropriate, further polyfunctional compounds differing from the monomers (Ia1) to (Ia3) and having reactive groups which are alcoholic hydroxyl groups, primary or secondary amino groups or isocyanate groups, and
Ia5) if appropriate, monofunctional compounds differing from the monomers (Ia1) to (Ia4) and having a reactive

group which is an alcoholic hydroxyl group, a primary or secondary amino group or an isocyanate group.

**5.** The aqueous dispersion according to claims 1 to 4, wherein the polyurethane (Ibi) is composed of

Ibi1) diisocyanates which are free of carbodiimide groups,
Ibi2) diols, of which

Ibi2.1) from 10 to 100 mol %, based on the total amount of the diols (Ibi2), have a molecular weight of from 500 to 5 000 and
Ibi2.2) from 0 to 90 mol %, based on the total amount of diols (Ibi2), have a molecular weight of from 60 to 500 g/mol,

Ibi3) monomers differing from the monomers (Ibi1) and (Ibi2) and having at least one isocyanate group or at least one group reactive toward isocyanate groups, which moreover carry at least one hydrophilic group or one potentially hydrophilic group, which produce water dispersibility of the polyurethanes,
Ibi4) if appropriate, further polyfunctional compounds differing from the monomers (Ibi1) to (Ibi3) and having reactive groups which are alcoholic hydroxyl groups, primary or secondary amino groups or isocyanate groups, and
Ibi5) if appropriate, monofunctional compounds differing from the monomers (Ibi1) to (Ibi4) and having a reactive group which is an alcoholic hydroxyl group, a primary or secondary amino group or an isocyanate group.

**6.** The aqueous dispersion according to claims 1 to 4, wherein the carbodiimide Ibii is one of the formula Ibii1

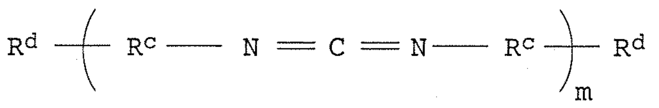

Ibii1

where

m is from 2 to 20,
$R^c$ is as defined the formula Ia1.1.1
$R^d$ is $-NH_2$

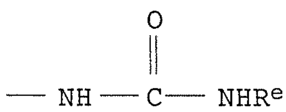

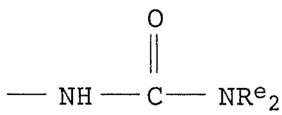

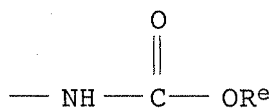

$-N=C=N-R^e$

and $R^e$, independently of one another, are $C_1$- to $C_{20}$-alkyl, $C_5$- to $C_{12}$-cycloalkyl, $C_6$- to $C_{20}$-aryl or $C_7$- to $C_{20}$-aralkyl, it being possible for from 1 to 4 hydrogen atoms of the radicals $R^e$ to be substituted by substituents inert to carbodiimide groups.

**7.** The aqueous dispersion according to claim 5, wherein the carbodiimide Ibii1 is one of the formula Ibii2

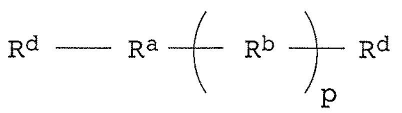

Ibii2

where $R^a$, $R^b$ and $R^d$ have the meanings stated in the formulae Ia1.1.2 and Ibii1 and p is from 2 to 20
or
of the formula Ibii3

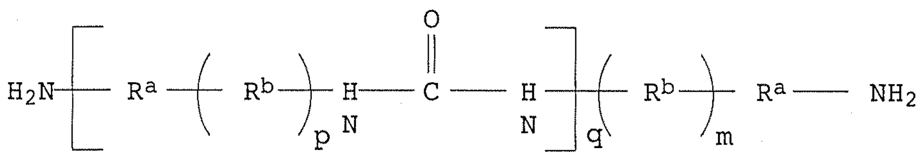

Ibii3

where $R^a$ and $R^b$ have the meanings stated in the formula Ia1.1.2, p is from 2 to 20 and q is from 1 to 10.

**8.** The aqueous dispersion according to claims 1 to 7, wherein the phase (P.II) is substantially formed from a polymer (II) which is derived from $C_1$- to $C_{20}$-alkyl (meth)acrylates and, if appropriate, acrylonitrile as monomers (II.1) and (meth)acrylic acid as monomer (II.2).

**9.** The use of the dispersion according to claims 1 to 8 as an impregnating composition, coating material or adhesive.

**10.** An article comprising wood, metal, textile, leather or plastic, which has been adhesively bonded, impregnated or coated with an aqueous dispersion according to claims 1 to 8.

## Revendications

**1.** Dispersions aqueuses de polyuréthanne à réticulation latente, contenant

I) une phase dispersée (P.I), contenant

Ia) un polyuréthanne (Ia) qui, à côté de groupes hydrophiles qui produisent la capacité de dispersion dans l'eau, porte des groupes carbodiimide et essentiellement aucun groupe carboxyle,
ou
Ib) un mélange physique

Ibi) d'un polyuréthanne (Ibi) qui porte des groupes hydrophiles qui produisent la capacité de dispersion dans l'eau et qui ne porte essentiellement aucun carbodiimide ou groupe carboxyle, et
Ibii) un carbodiimide (Ibii) qui ne porte aucun groupe hydrophile qui produise la capacité de dispersion dans l'eau,

et
II)une phase dispersée (P.II), contenant un autre polymère (II) qui ne porte essentiellement aucun groupe carbodiimide et qui est essentiellement dérivé

II.1) de 30 à 99,98 % en poids de monomères principaux choisis parmi des (méth)acrylates d'alkyle en $C_1$-$C_{20}$, des esters vinyliques d'acides carboxyliques contenant jusqu'à 20 atomes de C, des substances vinyl-aromatiques comportant jusqu'à 20 atomes de C, des nitriles éthyléniquement insaturés, des halogénures de vinyle et des hydrocarbures aliphatiques comportant 2 à 8 atomes de C et 1 ou 2 doubles liaisons,
II.2) de 0,01 à 20 % en poids d'un acide carboxylique comportant une double liaison oléfinique, et

II.3) de 0,01 à 10 % en poids d'un monomère différent des monomères II.1 et II.2, qui est choisi parmi le groupe constitué de N-méthylol-(méth)acrylamide (AMOL), (MAMOL), de (méth)acrylate d'acétoacétoxyéthyle, de diacétone(méth)acrylamide, de (méth)acrylate de glycidyle, d'uréido-(méth)acrylate, d'anhydride d'acide (méth)acrylique,

II.4) éventuellement de monomères polymérisables par voie radicalaire, différents de (II.1), (11.2) et (II.3).

**2.** Dispersions aqueuses suivant la revendication 1, dans lesquelles les groupes carbodiimide sont introduits dans le polyuréthanne (Ia) par l'intermédiaire de polyisocyanates (Ia1) de la formule générale Ia1.1.1 :

$$OCN\text{-}(R^c\text{-}N{=}C{=}N)_n\text{-}R^c\text{-}NCO \qquad (Ia1.1.1)$$

dans laquelle $R^c$ représente un radical d'hydrocarbure bivalent, présentant éventuellement des groupes urée, uréthanne, ester et/ou éther, tel qu'obtenu par élimination des groupes isocyanate à partir d'un isocyanate organique simple ou d'un prépolymère présentant des groupes uréthanne et éventuellement des groupes éther ou ester, qui porte en position terminale des groupes isocyanate, des radicaux $R^c$ correspondant à la définition précitée, différents, pouvant aussi se présenter simultanément, en présence de plusieurs radicaux $R^c$ dans la même molécule, et n vaut un nombre entier ou fractionnaire (dans une moyenne statistique) de 1 à 20, de préférence de 2 à 10.

**3.** Dispersions aqueuses suivant la revendication 1 ou 2, dans lesquelles les groupes carbodiimide sont introduits dans le polyuréthanne (Ia) par l'intermédiaire de polyisocyanates (Ia1) de la formule générale Ia1.1.2 :

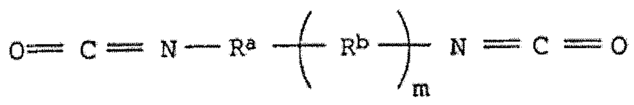

Ia1.1.2

avec

$R^a$ : un groupe de la formule Ia1.2.1 :

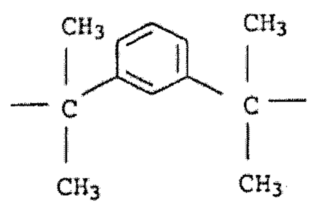

Ia1.1.2.1

$R^b$ : un groupe de la formule Ia1.1.2.2 :

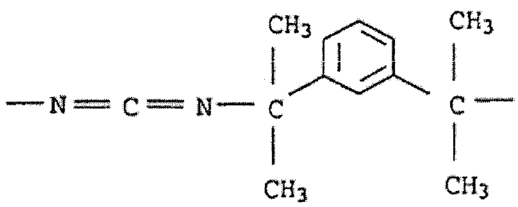

Ia1.1.2.2

et

m : un nombre de 1 à 20.

**4.** Dispersions aqueuses suivant les revendications 1 à 3, dans lesquelles la phase (P.I) est essentiellement formée à partir d'un polyuréthanne (Ia) qui est constitué

Ia1) de diisocyanates qui

Ia1.1) contiennent des groupes carbodiimide, et éventuellement de ceux
Ia1.2) qui sont exempts de groupes carbodiimide,

Ia2) de diols, dont

Ia2.1) 10 à 100 % molaires, par rapport à la quantité totale des diols (Ia2), présentent un poids moléculaire de 500 à 5000, et
Ia2.2) 0 à 90 % molaires, par rapport à la quantité totale des diols (Ia2), présentent un poids moléculaire de 60 à 500 g/mole,

Ia3) de monomères différents des monomères (Ia1) et (Ia2), comportant au moins un groupe isocyanate ou au moins un groupe réactif vis-à-vis des groupes isocyanate, qui portent en outre au moins un groupe hydrophile ou un groupe potentiellement hydrophile par lequel la capacité de dispersion dans l'eau des polyuréthannes est produite,
Ia4) éventuellement d'autres composés polyvalents différents des monomères (Ia1) à (Ia3), comportant des groupes réactifs pour lesquels il s'agit de groupes hydroxyle alcooliques, de groupes amino primaires ou secondaires ou de groupes isocyanate, et
Ia5) éventuellement de composés monovalents différents des monomères (Ia1) à (Ia4), comportant un groupe réactif pour lequel il s'agit d'un groupe hydroxyle alcoolique, d'un groupe amino primaire ou secondaire ou d'un groupe isocyanate.

**5.** Dispersions aqueuses suivant les revendications 1 à 4, dans lesquelles le polyuréthanne (Ibi) est constitué

Ibi1) de diisocyanates qui sont exempts de groupes carbodiimide,
Ibi2) de diols, dont

Ibi2.1) 10 à 100 % molaires, par rapport à la quantité totale des diols (Ibi2), présentent un poids moléculaire de 500 à 5000, et
Ibi2.2) 0 à 90 % molaires, par rapport à la quantité totale des diols (Ibi2), présentent un poids moléculaire de 60 à 500 g/mole,

Ibi3) de monomères différents des monomères (Ibi1) et (Ibi2), comportant au moins un groupe isocyanate ou au moins un groupe réactif vis-à-vis des groupes isocyanate, qui portent en outre au moins un groupe hydrophile ou un groupe potentiellement hydrophile par lequel la capacité de dispersion dans l'eau des polyuréthannes est produite,
Ibi4) éventuellement d'autres composés polyvalents différents des monomères (Ibi1) à (Ibi3), comportant des groupes réactifs pour lesquels il s'agit de groupes hydroxyle alcooliques, de groupes amino primaires ou secondaires ou de groupes isocyanate, et
Ibi5) éventuellement de composés monovalents différents des monomères (Ibi1) à (Ibi4), comportant un groupe réactif pour lequel il s'agit d'un groupe hydroxyle alcoolique, d'un groupe amino primaire ou secondaire ou d'un groupe isocyanate.

**6.** Dispersions aqueuses suivant les revendications 1 à 4, dans lesquelles, pour ce qui concerne le carbodiimide Ibii, il s'agit d'un composé de la formule générale Ibii1 :

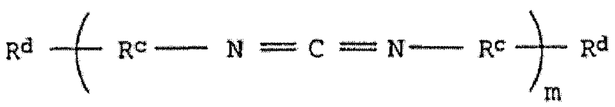

Ibii1

où

m : un nombre de 2 à 20,
$R^c$ : comme défini pour la formule générale Ia1.1.1,
$R^d$: $-NH_2$

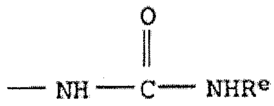

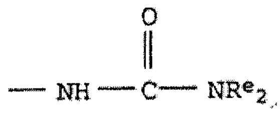

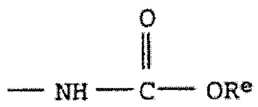

-N=C=N-$R^e$

et $R^e$ représentent indépendamment les uns des autres des groupes alkyle en $C_1$-$C_{20}$, cycloalkyle en $C_5$-$C_{12}$, aryle en $C_6$-$C_{20}$ ou aralkyle en $C_7$-$C_{20}$, 1 à 4 atomes d'hydrogène des radicaux $R^e$ pouvant être substitués par des substituants inertes vis-à-vis des groupes carbodiimide.

**7.** Dispersions aqueuses suivant la revendication 5, dans lesquelles, pour ce qui concerne le carbodiimide Ibii1, il s'agit d'un composé de la formule générale Ibii2 :

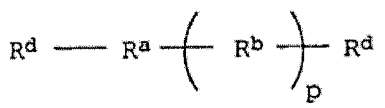

Ibii2

dans laquelle $R^a$, $R^b$ et $R^d$ ont la signification donnée dans les formules Ia1.1.2 et Ibii1 et p est un nombre de 2 à 20, ou
de la formule générale Ibii3 :

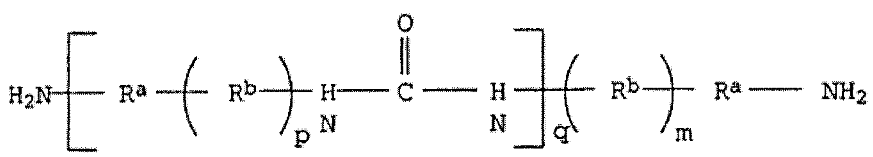

Ibii3

dans laquelle $R^a$ et $R^b$ ont la signification donnée dans la formule Ia1.1.2, p est un nombre de 2 à 20 et q est un nombre de 1 à 10.

**8.** Dispersions aqueuses suivant les revendications 1 à 7, dans lesquelles la phase (P.II) est essentiellement formée d'un polymère (II) qui est dérivé de (méth)acrylates d'alkyle en $C_1$-$C_{20}$ et éventuellement d'acrylonitrile, comme monomères (II.1), et d'acide (méth) acrylique, comme monomère (II.2).

**9.** Utilisation des dispersions suivant les revendications 1 à 8, comme produit d'imprégnation, produit de revêtement ou adhésif.

**10.** Objets en bois, métal, textile, cuir ou matière synthétique qui sont collés, imprégnés ou enduits avec une dispersion aqueuse suivant les revendications 1 à 8.